# EUROPÄISCHE PATENTANMELDUNG

(11) **EP 1 215 112 A2**
(43) Veröffentlichungstag der Anmeldung: **19.06.2002**
(21) Anmeldenummer: 01128944.4
(22) Anmeldetag: 06.12.2001
(51) Int. Cl.: B62J 17/00

(54) **Tret- oder motorgetriebenes, ein- oder mehrspuriges Allwetterfahrzeug**

(30) Priorität: 12.12.2000 DE 10061921
(71) Anmelder: Bünder, Hans-Joachim, 19386 Lübz (Mecklenburg) (DE)
(72) Erfinder: Bünder, Hans-Joachim, 19386 Lübz (Mecklenburg) (DE)

(57) **Zusammenfassung**

Ein -oder mehrspuriges Allwetterfahrzeug, wobei bei "Schönwetterfahrt" auf dem hinteren Gepäckträger lotrecht und parallel nebeneinander angeordnete unzerbrechliche Zwillingsverbundstäbe mit Flaggen eingesteckt sind und ferner das Fahrzeug mit je einem hinteren sowie vorderen Gepäckträger mit Hohlkammer und mit seitlich integrierten hohlen Auslegerarmen quadratischen und rechteckigen Profilquerschnitts ausgestattet ist und wobei in der offenen Hohlkammer des hinteren Gepäckträgers ein eingeholtes und angeringtes Wetterverdeck weitestgehend untergebracht ist und wobei bei " Schlechtwetterfahrt " alle integrierten Auslegerarme nach hinten und vorne hin um 90° ausgeklappt und die somit zum Gerüst niedergebogenen Zwillingsstäbe seitlich versetzt ganz eingesteckt werden wonach das Verdeck auf den Zwillingsstäben herübergezogen und auslegergerecht befestigt wird und das Fahrzeug somit um ca. 95% von Schnee und Regen abdeckt, nach Fig. 1.

## Beschreibung

Die fertigende Zweiradindustrie hinsichtlich Fahrräder und Leichtmotorräder mit niedrigen Geschwindigkeiten als auch der zuständige Handel beschränken sich ganz allgemein darauf, dem Kunden Fahrzeuge anzubieten, die in der Regel nur bei Nichtregenwetter Verwendung finden. Verlangt der Kunde aber mal nach einem Fahrzeug, insbesondere Fahrrad, das sowohl bei "Schönwetter" als auch bei "Regen- bzw. naßkaltem Schneewetter" einsetzbar ist, so muß er bald zu seinem Leid feststellen, dass derartige Wunschfahrzeuge gamicht erst im Handel geführt werden bzw. in serienmäßiger fabrikatorischer Hinsicht kaum oder garnicht gefertigt werden. Um aber dem Kunden helfen zu können, wird der Händler ihm sein reichhaltig gefülltes Lager bzw. Sortiment von Regenbekleidung aller Art und Größen sowohl für den Radler als auch für die Radlerin, einschließlich Kinder, zu den unterschiedlichsten Preisen meistens sofort im Laden anbieten können. Demzufolge bleibt dem Kunden nichts anderes übrig, als zwangsläufig auf derartig greifbare Regenbekleidung zurückzugreifen und dies natürlich zum gerade neugekauften Fahrrad noch extra zu bezahlen, wenn er unbedingt Wert darauf legt, auch bei Regen- und Schneewetter fahren zu können und unterwegs nicht naß zu werden.
In reinen Ausnahmefällen jedoch kann der Händler dem Kunden spezielle teure Fahrräder anbieten bzw. ihn an Hersteller verweisen, die in "Vorbestellung" gefertigt werden und die entweder schon mit einem mittels Metallgestänge fest am Fahrzeug montierten mobilen Regenverdeck, meistens aus Kunststoffolie und/oder Leinengewirke mit eingefaßten Sichtfenster oder mit einem nachträglich vom Kunden selbst an's Fahrzeug zu montierendem Regenverdeck mannigfaltigster Ausführung, ausgestattet sind, anbieten; meistens Gerüste mit zugehörigen Regenverdecken die aufwendig hergestellt, und weil nicht serienmäßig hergestellt, in der Regel auch teuer und oftmals auch viel zu schwer sind. Und femer, bei einem unterwegs plötzlich aufkommenden Regen muß der Radler sein Verdeck erst mühsam am Fahrrad aufrüsten, was aber schnell gehen muß, ein Aufrüsten, das womöglich viel zu lange dauert ohne dabei naß zu werden. Nach dem plötzlichen Regenschauer könnte alsbald die Sonne wieder scheinen und wiederum muß er seine Verdeckeinrichtung mit Gestänge mühsam abrüsten und es in Taschen oder dergl. verpacken, denn schließlich will er seine Verdeckeinrichtung nicht unnütz mit sich herumfahren. Das öfter mühsame und zeitwierige Auf- und Abrüsten jedoch und es jedesmal in Taschen zu verstauen, ist dem Radler - und erst recht der Radlerin - bald Leid und er neigt dazu, demzufolge lieber ganz auf eine derartig auf- und abrüstbare Vorrichtung zu verzichten, weil eben der Umstand des oftmaligen Auf- und Abrüstens einfach zu groß, die Vorrichtung einschließlich Gestänge meistens auch noch zu schwer und das Verpacken in Taschen zu zeitraubend ist. Wenn sein Gepäckträger bzw. die dort seitlichen Gepäcktaschen seines Fahrrades bereits mit Gepäck aller Art bepackt sind, und das ist bei einer Überland- bzw. Wanderfahrt meistens der Fall, so stellt sich für den regengeplagten Radler die Frage, wohin denn nun mit dem abgerüsteten, ansonsten bei langandauerndem Regen sehr nützlichem Regenverdeck mannigfaltigster Ausführung am Fahrrad bzw. Leichtmotorrad. In dieser Situation versetzt, muß sich jeder Radler zwangsläufig die Frage stellen, doch lieber gleich auf eine passende leichte Regenbekleidung wie vom Händler schon anfangs im Laden vorgeschlagen, zurückzugreifen und auf ein teures mobiles oder nachträglich vom Kunden aufrüstbares "Regenfahrzeug" gleich welcher derzeitigen Bauart auch immer, zu verzichten.

Um im dichten und fließenden Straßenverkehr nicht übersehen oder gar von Autos überrollt zu werden, ist es bereits bei Kinderfahrrädern seit langem schon bekannt, derart kleine oder niedrig gebaute Fahrräder, bspw. auch Langräder für Erwachsene, mit einem am hinteren Fahrzeugende aus Kunststoffverbundmaterial bestehenden Sicherheitswimpel, auzurüsten.

Diese bewährte Tatsache macht sich die offenbarte Erfindung dahingehend zu Nutze beim heutigen dichten Verkehrsaufkommen auch größere und höher gebaute Fahrzeuge z.B. für Erwachsene ― ein- oder mehrspurig ― mit einem derartigen, ebenso aus Verbundkunststoffmaterial bestehenden Vollstab oder Rohr einschließlich einer Flagge mit Schutzkugel, zu versehen.

Zum Stande der Technik diesbezüglich in Betracht gezogene Druckschriften:
- US 4560196, JP 5-254473 A: motorgetriebenes, einspuriges Allwetterfahrzeug mit Zwillingsverbundvollstäben;
- DE 8711260 U1, DE 7825460 U1: pedalgetriebenes, einspuriges Fahrzeug mit beflaggtem Vollstab;
- DE 3517967 C2: pedalgetriebenes, einspuriges Allwetterfahrzeug mit einem vorderen und hinteren Gepäckträger sowie mit einem Wetterverdeck;
- DE 8127679 U1: pedalgetriebenes einspuriges Fahrzeug mit fest angerahmten vorderen Gepäckträger, in seiner Mitte eine abschließbare Kammer einschließlich einer Lampe;
- DE 29819476 U1: pedalgetriebenes einspuriges Allwetterfahrzeug mit auf Gelenken schwenkbaren um 90° ausklappbaren Auslegerarmen an vorderen und hinteren Befestigungen;
- AT 393482 B, JP 5-254473 A: pedal- bzw. motorgetriebenes einspuriges Allwetterfahrzeug mit hinteren rahmenfesten Gepäckträger, der in seiner Mitte eine offene Hohlkammer zur ständigen Unterbringung eines Wetterverdecks und auf Hohlgelenken schwenkbare, um 90° ausklappbare hohle Auslegerarme aufweist;
- JP 5-254473 A: motorgetriebenes einspuriges Allwetterfahrzeug mit Bohrungen zur Aufnahme der zugehörigen Klemmbuchsen zur Befestigung der Vorderseite des Wetterverdecks;

Die Erfindung stellt sich die Aufgabe, ein mit bekannten Sicherheitswimpeln zur Erhöhung der Verkehrssicherheit auf den Straßen ausgestattetes Fahrrad von "Schönwetter" schnell und einfach ohne Zuhilfenahme von Werkzeug auf "Schlechtwetterfahrt" umzurüsten.

Diese Aufgabe wird mit den im Anspruch 1 genannten Merkmalen gelöst.

Die in der Anmeldung offenbarte Erfindung wird in der Hauptsache gebildet aus:
- den beiden gleichlangen, parallel und aufrecht zueinander stehenden, am hinteren Gepäckträger eingesteckten biegsamen und aus unzerbrechlichen Verbundkunststoffmaterial bestehenden Vollstäben oder Rohren und mit einem hierauf von Hand herüberziehbaren an und für sich bekannten Regenverdeck aus Textilgewirke mit eingefaßtem Sichtfenster aus Kunststoffolie oder einer glasklaren Kunststofffolie;
- den am starren Fahrzeugrahmen bzw. Steuerkopfrohr fest angeordneten beiden hohlen Gepäckträgern für hinten und vorne am Fahrzeug mit jeweils unterschiedlichen Baumaßen;
- den seitlich an beiden Gepäckträgern integrierten und über Gelenken um jeweils 90° aufklappbaren Auslegerarmen in Form von Hohlprofilen quadratischen (für vorne) sowie rechteckigen (für hinten) Querschnittes zur Aufnahme der Verbundzwillingsstäbe bzw. ―rohre
- einer im hinteren Gepäckträger integrierten offenen Kammer zur weitestgehenden Unterbringung des von Hand eingeholten Wetterverdecks zwecks "Schönwetterfahrt" sowie einer im vorderen Gepäckträger integrierten Kammer zur Unterbringung nützlicher Dinge.

Weitere Merkmale sind Inhalt der Unteransprüche.

Der Erfindungsgegenstand hat insbesondere folgende Vorteile:
Da das abgerüstete Allwetterfahrzeug in beide Gepäckträger zurückgeklappte und integrierte Auslegerarme sowie ein eingeholtes und weitestgehend im offenen Hohlraum des hinteren Gepäckträgers untergebrachtes Wetterverdeck aufweist, ist es somit in seiner Breite und Länge nicht größer als ein herkömmliches großes Erwachsenenfahrrad auch ist, wobei die Zwillingsstäbe nach oben hin platzmäßig nicht stören und der Händler kann es somit neben oder auch zwischen allen anderen Fahrrädern wie üblich, in seinen Laden aufstellen, ohne das es diesen Rädern den Unterstellplatz über Norm streitig macht und der regengeplagte Kunde kann sich somit auch mal für diese Neuheit interessieren, ohne gleich auf Regenbekleidung zurückgreifen zu müssen, nur weil ihm bisher keine andere Wahl blieb.
Es ist problemlos in ca. 2 Minuten und auch von Jugendlichen von "Schönwetter-" auf "Schlechtwetterfahrt" ohne Zuhilfenahme von Werkzeug oder dergl. umrüstbar, d.h. einem sich plötzlich nahendem Regenschauer kann z.B. auf Unterwegsfahrt ohne Unterstellmöglichkeiten schnell begegnet werden, ohne dabei wesentlich nass geworden zu sein.
Sowohl auf dem vorderen als auch auf dem hinteren Gepäckträger mitgenommenes Gepäck ist auf einer "Schlechtwetterfahrt" gänzlich vor Regen/Schnee geschützt.
In gewohnter Weise kann am Lenker ein Einkaufskorb angehängt werden, sofern der beim Lenken mitschwenkende Einkaufskorb in seiner Tiefe eine gewisse Distanz zur starren Ladefläche des vorderen Gepäckträgers aufweist oder in Ermangelung eines Korbes kann der Gepäckträger mit leichtem Gepäck beladen werden.
Da die gesamte Vorrichtung, insbesondere die Zwillingsstäbe bzw. ―rohre, als Traggerüst für das Verdeck ausgelegt ist, ist das Fahrrad demgemäss leichtgewichtig, was sich für den Radler auf weitere Strecken als vorteilhaft erweist und auch beide Gepäckträger können z.B. aus Leichtmetall, insbesondere legiertem Alu, leichtgewichtig gebaut sein.
Die Ausstattung mit einem zweiten Verbundstab einschließlich Wimpel mit Sicherheitskugel kann bei Schönwetterfahrt die allgemeine Verkehrssicherheit erhöhen,.
Da die Seiten des Verdecks offen sind, können auch ältere Radler das Allwetterfahrrad gefahrlos und bequem besteigen, darüber hinaus hört uns sieht man den Straßenverkehr besser, als wenn das Verdeck beispielsweise geschlossen wäre.
Das auf Gerüst gezogene Wetterverdeck bietet sowohl für den Radler als auch für das Fahrzeug eine ca. 95%tige Regenabdeckung, insbesondere auch vorne und hinten am Fahrzeug Schutz vor nasskaltem Fahrtwind.
Die Mitnahme eines Kleinkindes z.B. bei "Schlechtwetterfahrt" bei aufgeklappten Auslegerarmen ist auf dem hinteren Gepäckträger dennoch möglich, und Kind und Radler sind vor Regen geschützt.
Die erfindungsgemäße. Vorrichtung kann insbesondere auch bei niedrig gebauten Langrädern und Dreirädern zur Anwendung kommen.
Die eigentliche Vorrichtung ist relativ billig herstellbar.
Das Regenverdeck kann ständig am Fahrzeug mitgeführt werden, ohne das es irgendwie stört, weil es weitestgehend in einem Gepäckhohlraum untergebracht ist und somit die Ladefläche des hinteren Gepäckträgers aber auch des vorderen Gepäckträgers für Gepäckaufnahme frei bleibt.
Es ist möglich, die erfindungsgemäße Vorrichtung so zu bauen, dass sie an alle herkömmliche Fahrräder nachträglich vom Kunden angebaut werden kann.
Bei Verstellen der längsverschiebbaren und arretierbaren Anschlagsflanschen auf den Verbundstäben kann das Verdeck höher oder tiefer gestellt werden und so den unterschiedlichen Körpergrößen der einzelnen Radler Rechnung getragen werden.
Das Allwetterfahrrad ist auf."Schönwetterfahrt" nicht sofort als Regenfahrrad auszumachen. Trotz erfindungsgemäßem Gepäckträger ― hinten sowie vorne - können diese zum Festhalten von Gepäck mit bewährten herkömmlichen Federbügeln ausgestattet sein.
Es ist möglich die Gepäckträger einschließlich deren Auslegarmen im Kunststoffspritzgussverfahren herzustellen, was schnell und billig geht.
Die erfindungsgemäße Allwettervorrichtung kann sowohl auf nur mit einer Gabelfederung bzw. auf nur mit einer Sattelrohrfederung als auch mit einer kompletten Rahmenfederung versehenem alten oder neuen Fahrzeug zur Anwendung kommen.
Das Fahrrad mit seiner neuen Allwettervorrichtung kann z.B. bezüglich seiner normalen Breite und Länge im Verhältnis zu herkömmlichen Fahrrädern ohne Regenvorrichtung in Zügen insbesondere auch in Interregiofernzügen mit bekanntlich acht eng nebeneinander vorhandenen Stellplätzen zum Einhängen von Fahrrädern, mitgeführt und transportiert werden, wobei es problemlos zwischen anderen Rädern eingehängt werden kann, ohne zu stören. Die Zwillingsstäbe werden vorher aus ihren Lagern gezogen und durch Umstecken entsprechend verkürzt und in die dortigen Gepäckträger eingelegt, was ebenso problemlos ist.

In den Zeichnungen ist die Erfindung dargestellt.
Es zeigen:
- Fig. 1,: Ansicht von der Seite als "Schönwetterfahrzeug"
- Fig. 2,: Ansicht von der Seite als aufgerüstetes "Schlechtwettertretfahrzeug"
- Fig. 3,: Ansicht von oben als "Schönwetterfahrzeug" nach Fig. 1.
- Fig. 4,: Ansicht von oben als "Schlechtwetterfahrzeug nach Fig. 2.
- Fig. 5,: Ansicht von hinten als "Schönwetterfahrzeug nach Fig. 1.
- Fig. 6,: Ansicht von hinten als "Schlechtwetterfahrzeug nach Fig. 2.
- Fig. 7,: Ansicht von vorne als "Schönwetterfahrzeug" nach Fig. 1
- Fig. 8,: Ansicht von vorne als "Schlechtwetterfahrzeug" nach der Fig. 2

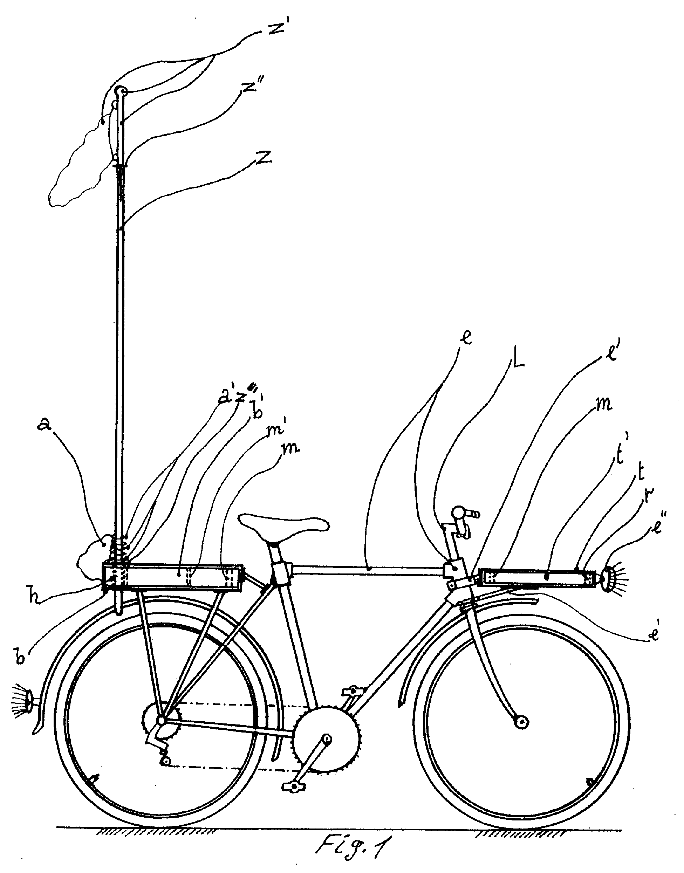

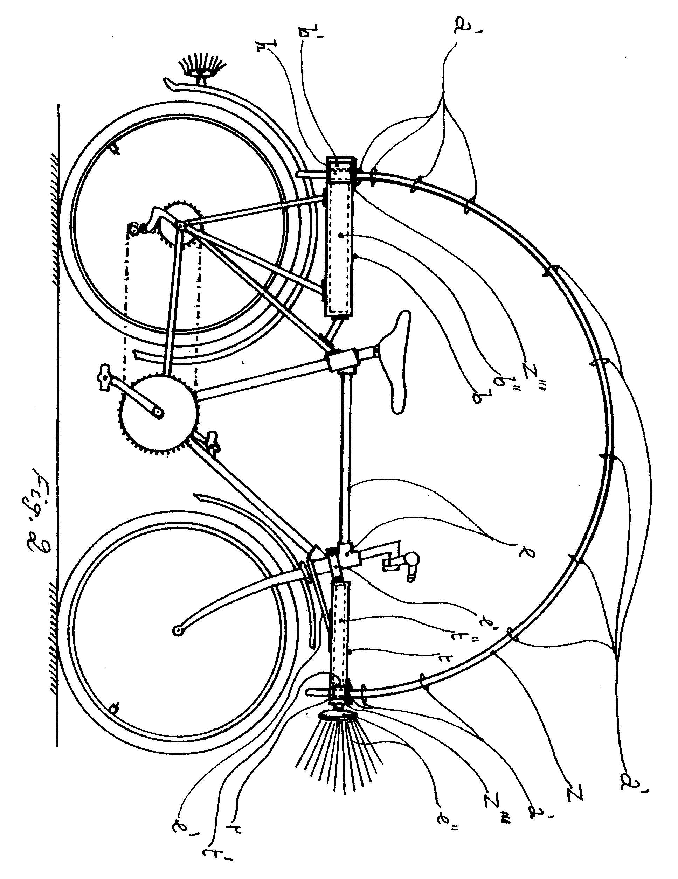

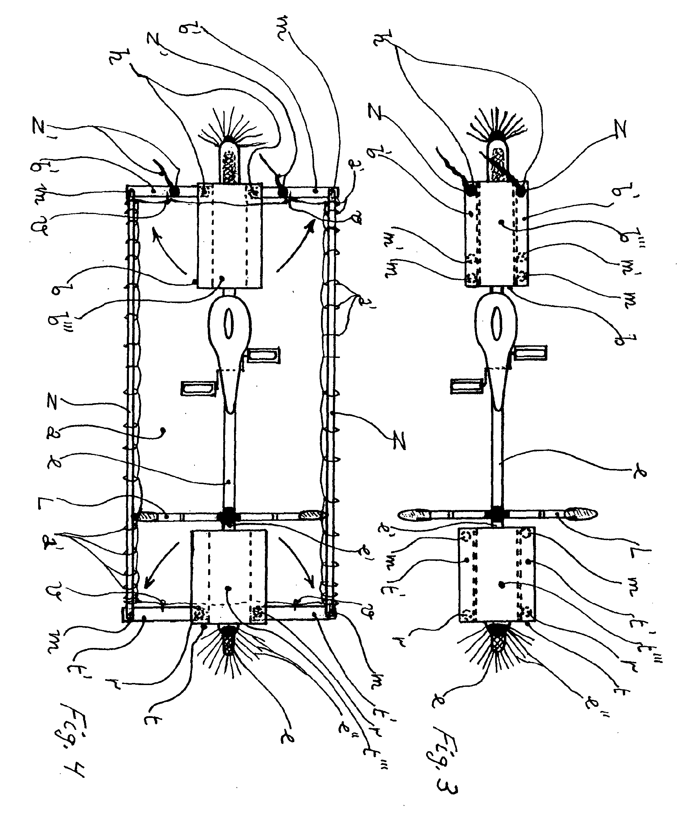

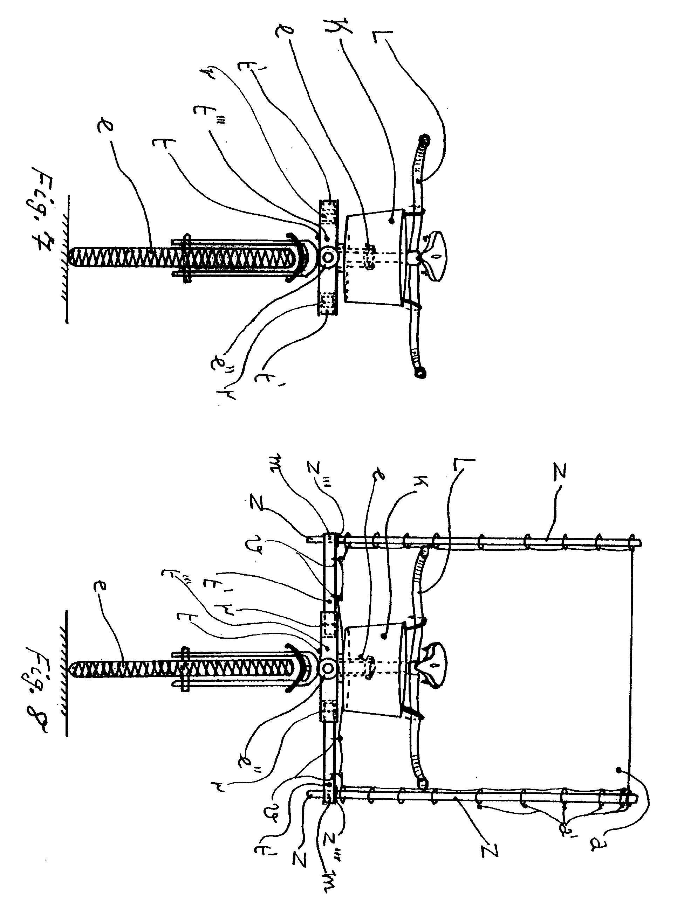

Erfinderisch weist das Fahrzeug (e) zwei gleichlange parallel nebeneinander angeordnete Zwillingsverbundstäbe- oder Rohre (z), deren obere Stabspitzen (z) umsteckbare Flaggen mit Schutzkugeln (z') sowie Anschlagsringe (z") haben, auf.
Bei "Schönwetterfahrt" nach den Fig. 1, 3 und 7 lagem beide Verbundstäbe (z) mit ihren im Fahrtwind wehenden Wimpeln (z') in lotrechter Stellung in Hohlgelenken oder Scharnieren (h), wovon für jeden Verbundstab (z) eines am hinteren Ende des hinteren Gepäckträgers (b) am Fahrrad (e) angeordnet ist. Um ein ungewolltes selbsttätiges tieferes Einsinken in die Hohlgelenke bzw. Scharniere (h) zu verhindern, weisen die Verbundzwillingsstäbe (z) auf ihren unteren Enden längsverschiebbare Anschlagsflanschen mit Flügelschrauben (z''') auf. Demgemäß kann des Verdeck (a) höher oder tiefer gestellt werden und so den unterschiedlichen Körpergrößen der einzelnen Radler Rechnung getragen werden.
Ferner weisen die Zwillingsstäbe (z) auf ihren unteren Enden das von Hand eingeholte und flüchtig zusammengeknautschte Regenverdeck (a), bestehend aus bekanntem dünnen Textilgewirke mit eingefaßtem Sichtfenster aus Kunststoffolie, Schirmseide oder überhaupt einer strapazierfähigen ganzen Klarsichtfolie aus Kunststoff mit seitlich angeordneten Befestigungsringen (a') zum Verschieben des Verdecks (a) auf den Stäben (z) auf.
Sowohl der hintere (b) als auch der vordere Gepäckträger (t) weisen auf ihren Mitten Hohlkammern (b''') und (t''') auf. In die offene Kammer (b''') des hinteren Gepäckträgers (b) deponiert der Radler weitestgehend sein von Hand eingeholtes Wetterverdeck (a), das mit den Zwillingsstäben mittels seitlichen Befestigungsringen (a') unlösbar verbunden ist, derart, dass die Tragefläche des hinteren Gepäckträgers (b) zum Bepacken mit Großgepäck frei bleibt.

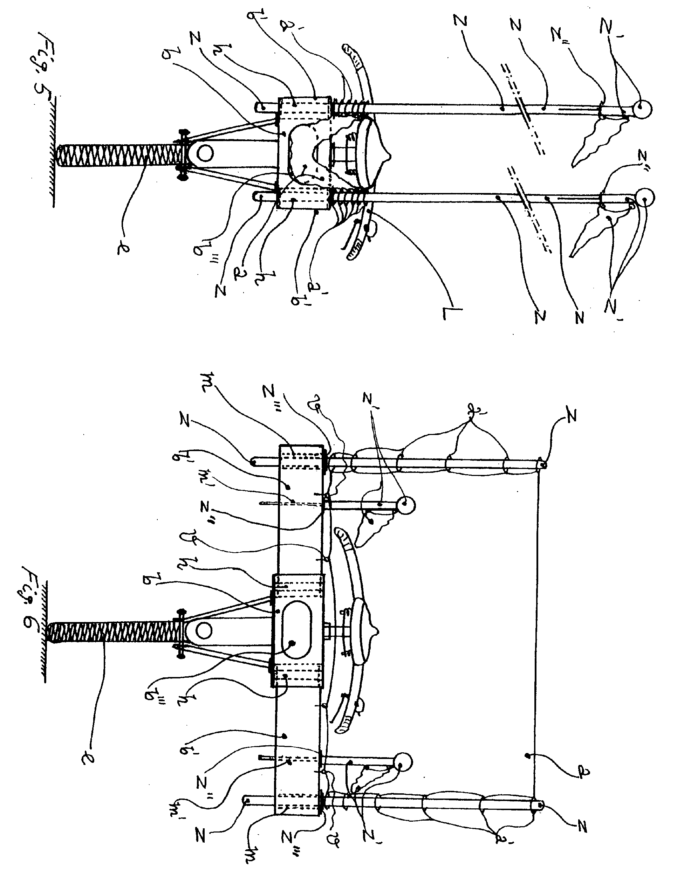

In die Kammer (t"') des vorderen Gepäckträgers (t) kann der Radler nützliche Kleindinge verwahren. Es können aber auch Akkus für sein elektromotorisiertes Fahrrad untergebracht werden.
Ferner können beide Gepäckträger mit herkömmlichen Federbügeln zum Festhalten von Kleingepäck ausgestattet sein (in der Zeichnung nicht dargestellt).
Soll das Allwetterfahrrad von "Schönwetter" schnell auf sich nahendes "Schnee-/Regenwetter" umgerüstet werden, so werden zunächst die am hinteren Gepäckträger (b) seitlich in den Fächern (b") integrierten beiden Auslegerarme (b'), die schwenkbar auf Hohlgelenke (h) lagern, gemäß Pfeilrichtung um 90° nach hinten heraus aufgeklappt, ebenso werden auch die am vorderen Gepäckträger (t) seitlich in ihren Fächern (t") integrierten beiden Auslegerarme (t'), die ebenso schwenkbar auf Gelenke (r) lagern, gemäß Pfeilrichtung um 90° nach vorne heraus aufgeklappt. Hierbei stimmen die Enden aller um 90° aufgeklappten Auslegerarme (b', t') in ihrer ganzen Breite parallel miteinander überein (siehe Fig. 4, 6, 8).
Nunmehr werden von Hand die lotrecht stehenden Zwillingsstäbe (z) aus ihren am hinteren Gepäckträger (b) angeordneten beiden Hohlgelenken (h) herausgezogen und in die äußeren seitlichen Einsteckführungen (m) bis hin zu ihren eingestellten längsverschiebbaren Anschlagsflanschen (z''') hineingesteckt. Bei dieser Handhabung wird das in der Kammer (b''') weitestgehend deponierte Regenverdeck (a) automatisch gänzlich mit herausgezogen und dabei ganz auseinander gefaltet. Alsdann werden die in den Führungen (m) aufrecht stehenden Zwillingsstäbe (z) nacheinander kreisartig ganz niedergebogen und ferner die oberen Stabspitzen (z) einschließlich deren Wimpeln mit Sicherheitskugeln (z') abgenommen und gleich in die Führungen (m') der hinteren Auslegerarme (b') bishin zu ihren Anschlagsringen (z") umgesteckt. Danach werden die freien Spitzen der somit verkürzten Stäbe (z) in die Führungen (m) der bereits aufgeklappten vorderen Auslegerarme (t') ebenso bishin zu ihren längsverschiebbaren Anschlagsflanschen (z''') eingesteckt. Da die beiden kreisartig und kräftig niedergebogenen Verbundstäbe (z) das ständige Bestreben haben, in ihre Ausgangsstellung der Geraden zurückzufedern, werden somit alle Auslegerarme (b',t') wunschgemäß und zwangsläufig voneinander weggedrückt, ohne dass hierbei die starren Auslegerarme irgendeinen Schaden nehmen. Somit ist das eigentliche "Gerüst" ohne Verschraubung fest am Fahrzeug (e) installiert und zum Tragen des Regenverdecks (a) einschließlich deren Befestigungsringen (a') vorbereitet. Nunmehr zieht der Radler sein soweit schon entfaltetes Verdeck mittels den Befestigungsringen (a') von hinten her ganz über das Verbundgerüst bis nach vorne hin am Fahrzeug (e) herüber und befestigt sowohl die Vorderseite als auch die offene Hinterseite des Verdecks (a) mit den am Verdeck angeordneten und bekannten kleinen Klemmbuchsen (v) oder dergl. Stöpsel durch federklemmartiges Hineinstecken in die dafür angeordneten Bohrungen an den Auslegerarmen (b', t').
Bei Umrüsten von "Schlechtwetter-" auf "Schönwetterfahrt" wird im umgekehrten Sinne, beginnend mit dem Ziehen der Klemmbuchsen (v) und Zurückziehen des Wetterverdecks (a) auf dem Verbundgerüst (z) usw., verfahren.
Da unterwegs am Fahrzeug (e) nichts verschraubt oder anders befestigt werden muß, wird die Umrüstzeit beim erfinderischen Allwetterfahrzeug ca. zwei Minuten betragen, gleich ob ab- oder aufgerüstet wird, d.h. einem plötzlichen Regenschauer auf Unterwegsfahrt ohne Unterstellmöglichkeiten kann der Radler schnell durch gekonntes Aufrüsten seiner Vorrichtung ohne Zuhilfenahme von Werkzeug erfolgreich entgegentreten, ohne dabei wesentlich naß geworden zu sein. Das erfindungsgemäße Regenverdeck deckt den allergrößten Teil des bemannten Fahrzeugs (e) sowohl in der Fahrzeuglänge als auch in der Fahrzeugbreite, nämlich ca. 95%, vor Regen, Schnee und kaltem Wind ab.
Bei genügender Distanz zur Lastfläche des vorderen Gepäckträgers (t) kann am Lenker (L) ein bekannter vollbepackter Einkaufskorb (k) auch bei aufgezogenem Regenverdeck in gewohnter Weise plaziert werden, ohne das der Inhalt naß wird. In Ermangelung eines Einkaufskorbes (k) kann der vordere Gepäckträger (t) mit Gepäck bepackt werden, wobei das Gepäck ― hinten und vorne - bei aufgezogenem Verdeck Platz findet und nicht naß werden kann.

## Patentansprüche

1. Tret- oder motorgetriebenes ein- oder mehrspuriges Allwetterfahrzeug mit beflaggten Zwillingsverbundvollstäben und/oder -rohren und mit einem vorderen und hinteren Gepäckträger sowie mit einem Wetterverdeck, wobei der an Rahmenschelle (e') und Rahmenstrebe (e') fest montierte vordere Gepäckträger (t) in seiner Mitte eine abschießbare Kammer (t"') einschließlich einer Lampe (e") aufweist und ferner zu beiden Seiten offene Kammern (t") aufweist, in denen auf Gelenke (r) schwenkbare und gemäß Pfeilrichtung nach vorne hin um 90° ausklappbare hohle Auslegerarme (t') quadratischen Profilquerschnitts integriert sind und ferner der hintere rahmenfeste Gepäckträger (b) in seiner Mitte eine offene Hohlkammer (b"') zur ständigen Unterbringung eines angeringten (a') Wetterverdecks (a) aufweist und ferner der Gepäckträger (b) zu beiden Seiten ebenso offene Kammern (b") aufweist, in denen auf Hohlgelenke (h) ebenso schwenkbare und gemäß Pfeilrichtung jedoch nach hinten hin um 90° ausklappbare hohle Auslegerarme (b') rechteckigen Profilquerschnitts integriert sind und ferner alle Auslegerarme (b', t') seitlich angebrachte Bohrungen zur Aufnahme der zugehörigen Klemmbuchsen (v) zur Befestigung der Vorder- und Rückseite des Wetterverdecks (a) aufweisen.

2. Tret- oder motorgetriebenes ein- oder mehrspuriges Allwetterfahrzeugs nach Anspruch 1, wobei Zwillingsstäbe und/oder Rohe (z) gleichlange und in ihren Querschnitten gleichstarke und beflaggte Vollstäbe und/oder -rohre (z) aus Verbundkunststoffmaterial mit eingelagerten Fasern aufweisen, die oberen Bereiche der Stäbe (z) mit drehbaren Flaggen (z') sowie Schutzkugeln (z') trenn- und umsteckbar voneinander ausgebildet sind, die bei "Schönwetterfahrt" parallel und lotrecht zueinander in Hohlgelenken (h) am hinteren Ende des hinteren Gepäckträgers (b) bis hin zu ihren Anschlagsflanschen (z") eingesteckt lagern, wobei bei "Schlechtwetterfahrt" der obere Bereich mit Flagge und Kugel in die dafür vorgesehenen beiden Führungen (m') bündig bis hin zu ihren Anschlagsflanschen (z") eingesteckt sind, die übrigen und somit verkürzten Zwillingsstäbe (z) in die vorgesehenen äußeren Führungen (m) bishin zu ihren Anschlagsflanschen (z''') auf die um 90° ausgeklappten beiden Auslegerarmen (b') bündig eingesteckt sind, wobei ferner die verkürzten Zwillingsstäbe (z) mit ihren oberen Enden in die beiden Führungen (m) der ebenfalls um 90° nach vorne hin ausgeklappten beiden Auslegerarmen (t') bishin zu ihren Anschlagsflanschen (z''') bündig eingesteckt sind, wobei ferner die am Fahrzeug (e) ausgebreiteten Auslegerarme (t') des vorderen Gepäckträgers (t) mit den ausgebreiteten Auslegerarmen (b') des hinteren Gepäckträgers (b) parallel zueinander ausgerichtet sind, wobei ferner das Wetterverdeck (a) mit seinen seitlich angeordneten Befestigungsringen (a') von Hand über das so geschaffene Traggerüst der Zwillingsstäbe (z) parallel herübergezogen ist und wobei ferner die offene Vorder- und Rückwand des Wetterverdecks (a) mittels herkömmlichen Klemmbuchsen (v) in ihre dafür vorgesehenen Bohrungen der ausgeklappten Auslegerarme (b', t') selbstklemmend eingesteckt und befestigt sind.

3. Tret- oder motorgetriebenes ein- oder mehrspuriges Allwetterfahrzeug nach Anspruch 1 oder 2, **dadurch gekennzeichnet, dass** das mit Ringen (a') versehene Wetterverdeck (a) aus einem Textilgewirke mit einer eingefaßten Klarsichtfolie aus Kunststoff, aus Schirmseide mit einer eingefaßten Klarsichtfolie aus Kunststoff oder auch gänzlich aus einer Klarsichtfolie aus Kunststoff bestehen kann.

4. Tret- oder motorgetriebenes ein- oder mehrspuriges Allwetterfahrzeug nach Anspruch 1 oder 2, **dadurch gekennzeichnet, dass** sowohl der vordere (t) als auch der hintere (b') Gepäckträger mit den Auslegerarmen (b', t') entweder aus Kunststoff oder aus Metall, bestehen kann.

5. Tret-oder motorgetriebenes ein-oder mehrspuriges Allwetterfahrzeug nach Anspruch 1 und 2, **dadurch gekennzeichnet, daß** die Gepäckträger mit den Auslegerarmen (b',t') aus Polypropylen, legiertem Aluminium, Edelstahl oder Titan bestehen.

6. Tret- oder motorgetriebenes ein- oder mehrspuriges Allwetterfahrzeug nach Anspruch 1 oder 2, **dadurch gekennzeichnet, dass** der Hohlraum (t''') im vorderen Gepäckträger (t) als Benzintank oder Akkuraum Verwendung findet.

7. Tret- oder motorgetriebenes ein- oder mehrspuriges Allwetterfahrzeug nach Anspruch 1 oder 2, **dadurch gekennzeichnet, dass** die Anschlagflanschen (z''') längsverschiebbar auf den Zwillingsstäben (z) und mittels Flügelschrauben arretierbar angeordnet sind.

8. Tret- oder motorgetriebenes ein- oder mehrspuriges Allwetterfahrzeug nach Anspruch 1 oder 2, **dadurch gekennzeichnet, dass** der Querschnitt der Zwillingsstäbe (z) rund ist.

9. Tret- oder motorgetriebenes ein- oder mehrspuriges Allwetterfahrzeug nach Anspruch 1 oder 2, **dadurch gekennzeichnet, dass** die Gepäckträger (b, t) herkömmliche Federstahlbügel zum Festhalten von Gepäck aufweisen können.

10. Tret- oder motorgetriebenes ein- oder mehrspuriges Allwetterfahrzeug nach Anspruch 1 oder 2, **dadurch gekennzeichnet, dass** zwischen Auslegerarmen (b', t') und deren Kammer (b", t") Klemmbuchsen (v') zum eingeklappten Festhalten der Auslegerarme angeordnet sind.
